(19) Europäisches Patentamt
European Patent Office
Office européen des brevets

(11) **EP 2 414 143 B1**

(12) **EUROPÄISCHE PATENTSCHRIFT**

(45) Veröffentlichungstag und Bekanntmachung des Hinweises auf die Patenterteilung:
**30.07.2014  Patentblatt 2014/31**

(21) Anmeldenummer: **10710567.8**

(22) Anmeldetag: **18.03.2010**

(51) Int Cl.:
*B29C 44/56* (2006.01)  *C08J 9/32* (2006.01)
*C08J 9/36* (2006.01)  *C09J 7/00* (2006.01)
*C09J 7/02* (2006.01)

(86) Internationale Anmeldenummer:
**PCT/EP2010/053541**

(87) Internationale Veröffentlichungsnummer:
**WO 2010/112346 (07.10.2010 Gazette 2010/40)**

(54) **VERFAHREN ZUR HERSTELLUNG EINES GESCHÄUMTEN MASSESYSTEMS**

METHOD FOR CREATING A FOAMED MASS SYSTEM

PROCÉDÉ DE FABRICATION D'UN SYSTÈME DE MASSE EXPANSÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.04.2009  DE 102009015233**

(43) Veröffentlichungstag der Anmeldung:
**08.02.2012  Patentblatt 2012/06**

(73) Patentinhaber: **TESA SE**
**20253 Hamburg (DE)**

(72) Erfinder:
• **CZERWONATIS, Franziska**
  **21075 Hamburg (DE)**
• **SCHÖNBOM, Stephan**
  **25436 Moorrege (DE)**
• **BURMEISTER, Axel**
  **22527 Hamburg (DE)**
• **LASS, Volker**
  **23869 Elmenhorst (DE)**

(56) Entgegenhaltungen:
WO-A1-03/011954      DE-A1- 3 237 392
US-A1- 2008 008 831

**Beschreibung**

Die Erfindung betrifft ein Verfahren zur Herstellung thermisch vernetzter, mit Mikroballons geschäumter Klebemassesysteme, insbesondere Selbstklebemassen, sowie derart hergestellte geschäumte Massen.

Für eine Vielzahl von Anwendungen sind geschäumte Massesysteme wichtig. Schäume sind beispielsweise in der Lage, mechanisch zu puffern, indem sie kinetische Energie absorbieren, oder auch Unebenheiten auszugleichen, da sie sich leicht verformen können.

Dies hat dazu geführt, dass auch bei der Klebstoffverarbeitung zunehmend geschäumte Massesysteme eingesetzt werden. So können beispielsweise bei der Klebebandherstellung, insbesondere bei der Selbstklebebandherstellung, sowohl geschäumte Trägermaterialien und/oder geschäumte (Selbst-)Klebemassen zum Einsatz kommen. Bei der Verklebung von Substraten miteinander kann dann insbesondere von den vorstehend genannten Vorteilen Gebrauch gemacht werden, indem die Klebebänder beispielsweise in der Lage sind, Unebenheiten der zu verklebenden Oberflächen auszugleichen.

Verfahren zur Herstellung Mikroballon geschäumter Selbstklebemassen und Trägerschichten sind seit längerem bekannt.

In der EP 0 257 984 A1 werden Klebebänder offenbart, die zumindest einseitig eine geschäumte Klebebeschichtung aufweisen. In dieser Klebebeschichtung sind Polymerkügelchen enthalten, die ihrerseits eine Flüssigkeit aus Kohlenwasserstoffen enthalten und bei erhöhten Temperaturen expandieren. Die Gerüstpolymere der Selbstklebemassen können aus Kautschuken oder Polyacrylaten bestehen. Die Mikrohohlkugeln werden hier entweder vor oder nach der Polymerisation zugesetzt. Die Mikroballons enthalten**d**en Selbstklebemassen werden aus Lösemittel verarbeitet und zu Klebebändern ausgeformt. Der Schritt der Schäumung erfolgt dabei konsequent nach der Beschichtung. So werden mikroraue Oberflächen erhalten. Daraus resultieren Eigenschaften wie insbesondere zerstörungsfreie Wiederablösbarkeit und Repositionierbarkeit. Der Effekt der besseren Repositionierbarkeit durch mikroraue Oberflächen von mit Mikroballon geschäumten Selbstklebemassen wird auch in weiteren Schriften wie DE 35 37 433 A1 oder WO 95/31225 A1 beschrieben.

Die mikroraue Oberfläche wird verwendet, um eine blasenfreie Verklebung zu erzeugen. Diese Verwendung offenbaren auch die EP 0 693 097 A1 und die WO 98/18878 A1. Dieses beschriebene Verfahren, also die Verarbeitung aus Lösungsmittel beziehungsweise die Expansion der eingearbeiteten Mikroballons nach der bahnförmigen Ausformung der Klebeschicht ist allerdings ungeeignet für die Herstellung von permanent klebenden geschäumten Klebmassesystemen.

Den vorteilhaften Eigenschaften der mikrorauen Oberfläche steht also immer eine deutliche Reduzierung der Verklebungsfestigkeit beziehungsweise der Schälfestigkeit gegenüber. Deswegen wird in der DE 197 30 854 A1 eine mit Mikroballons aufgeschäumte Trägerschicht vorgeschlagen, welche zur Vermeidung des Verklebungsfestigkeitsverlustes, die Verwendung von ungeschäumten druckempfindlichen Selbstklebemassen ober- und unterhalb eines geschäumten Kerns vorschlägt.

Die Anfertigung der Trägermischung findet vorzugsweise in einem für die Elastomer-Compoundierung typischen Innenmischer statt. Die Mischung wird dabei insbesondere auf einen Mooneywert $ML_{1+3}$ (100 °C) im Bereich von 10 bis 80 eingestellt. Der Mischung werden in einem zweiten kühlen Arbeitsgang mögliche Vernetzer, Beschleuniger und die gewünschten Mikroballons zugesetzt. Dieser zweite Arbeitsgang findet vorzugsweise bei Temperaturen kleiner 70 °C in einem Kneter, Innenmischer, Mischwalzwerk oder Doppelschneckenextruder statt. Die Mischung wird anschließend auf Maschinen auf die gewünschte Dicke extrudiert und/oder kalandert. Anschließend wird der Träger beidseitig mit einer druckempfindlichen Selbstklebemasse versehen. Darauf folgen die Schritte der thermischen Schäumung und gegebenenfalls der Vernetzung.

Die Expansion der Mikroballons kann dabei entweder vor dem Einarbeiten derselben in die Polymermatrix erfolgen oder erst nach dem Ausformen der Polymermatrix zu einem Träger.

In expandierter Form hat die Hülle der Mikroballons nur eine Dicke von 0,02 $\mu$m. Demnach ist die vorgeschlagene Expansion der Mikroballons noch vor dem Einarbeiten in die Polymermatrix des Trägermaterials nachteilig, da hierbei durch die hohen Kräfte bei der Einarbeitung viele Ballons zerstört werden und der Schäumungsgrad somit reduziert wird. Weiterhin führen teilweise geschädigte Mikroballons zu Dickenschwankungen. Ein robuster Herstellprozess ist kaum zu erreichen. Entsprechend wird favorisiert, die Schäumung nach der bahnförmigen Ausformung in einem Thermokanal durchzuführen. Aber auch hierbei kommt es leicht zu stärkeren Abweichungen der mittleren Trägerdicke von der gewünschten Dicke aufgrund von nicht exakt konstanten Bedingungen des Gesamtprozesses vor der Schäumung sowie nicht exakt konstanter Bedingungen im Thermokanal während der Schäumung. Eine gezielte Korrektur der Dicke ist nicht mehr möglich. Ebenso müssen erhebliche statistische Abweichungen in der Dicke in Kauf genommen werden, da sich lokale Abweichungen in der Konzentration von Mikroballons und auch anderer Trägerbestandteile direkt in Dickenschwankungen bemerkbar machen.

Einen ähnlichen Weg beschreibt die WO 95/32851 A1. Hier wird vorgeschlagen, zwischen geschäumtem Träger und Selbstklebemasse zusätzliche thermoplastische Schichten vorzusehen.

Beide Wege erfüllen zwar die Forderung der hohen Schälfestigkeit, führen aber zwangsläufig auch zu Produkten mit höherer Anfälligkeit, weil die einzelnen Schichten unter Belastung zu Verankerungsbrüchen führen. Darüber hinaus wird die gewünschte Anpassungsfähigkeit solcher Produkte deutlich eingeschränkt, weil der geschäumte Anteil eines Aufbaus zwangsläufig reduziert wird.

In der EP 1 102 809 B1 wird ein Verfahren vorgeschlagen, in dem die Mikroballons teilweise vor Austritt aus einer Beschichtungsdüse expandieren und gegebenenfalls durch einen nachgeschalteten Schritt zur vollständigen Expansion gebracht werden. Dieses Verfahren ist allerdings in seiner Funktion bei der Masseviskosität stark limitiert. Hoch viskose Massesysteme führen unweigerlich im Düsenspalt zu einem hohen Spaltdruck, welcher die expandierten Mikroballons komprimiert beziehungsweise verformt. Nach Austritt aus der Düse nehmen die Mikroballons wieder ihre Ursprungsform an und durchbrechen die Klebemassenoberfläche. Dieser Effekt verstärkt sich durch zunehmende Masseviskosität, abnehmende Schichtdicke und sinkendes Raumgewicht beziehungsweise steigenden Mikroballonanteil.

Mikroballon geschäumte (Selbst-)Klebemassen oder Trägerschichten zeichnen sich durch eine definierte Zellstruktur mit einer gleichmäßigen Größenverteilung der Schaumzellen aus. Es sind geschlossenzellige Mikroschäume ohne Kavitäten, wodurch im Vergleich zu offenzelligen Varianten eine bessere Dichtung empfindlicher Güter gegen Staub und flüssige Medien erzielt werden kann.

Durch ihre flexible, thermoplastische Polymerschale besitzen derartige Schäume eine höhere Anpassungsfähigkeit als solche, die mit nicht expandierbaren, nicht polymeren Mikrohohlkugeln (Glashohlkugeln) gefüllt sind. Sie eignen sich besser zum Ausgleich von Fertigungstoleranzen wie sie zum Beispiel bei Spritzgussteilen die Regel sind und können aufgrund ihres Schaumcharakters auch thermische Spannungen besser kompensieren.

Des Weiteren können durch die Auswahl des thermoplastischen Harzes der Polymerschale die mechanischen Eigenschaften des Schaums weiter beeinflusst werden. So ist es beispielsweise möglich, selbst dann, wenn der Schaum eine geringere Dichte als die Matrix aufweist, Schäume mit höherer Kohäsionsfestigkeit als mit der Polymermatrix allein herzustellen. So können typische Schaumeigenschaften wie die Anpassungsfähigkeit an raue Untergründe mit einer hohen Kohäsionsfestigkeit für PSA-Schäume kombiniert werden.

Klassisch chemisch oder physikalisch geschäumte Materialien sind demgegenüber für ein irreversibles Zusammenfallen unter Druck und Temperatur anfälliger. Auch die Kohäsionsfestigkeit ist hier niedriger.

In der DE 21 05 877 C wird ein Klebeband aufgezeigt, das aus einem Träger besteht, der auf mindestens einer Seite mit einem mikrozellulären druckempfindlichen Klebstoff beschichtet ist und dessen Klebstoffschicht einen Keimbildner enthält, wobei die Zellen der Klebstoffschicht geschlossen und vollständig in der Klebstoffschicht verteilt sind. Dieses Klebeband kann sich der unregelmäßigen Oberfläche, auf die es gebracht wird, anpassen und somit zu einer relativ dauerhaften Verklebung führen, zeigt aber andererseits auch nur eine geringe Erholung, wenn es auf die Hälfte der ursprünglichen Dicke zusammengedrückt worden ist. Die Hohlräume in der Klebmasse bieten Ansätze für seitliches Eintreten von Lösungsmitteln und Wasser in die Klebfuge was sehr unerwünscht ist. Weiterhin kann der vollständige Durchtritt von Lösungsmitteln oder Wasser durch das gesamte Klebeband nicht ausgeschlossen werden.

Auch WO 03/011954 A1 hat geschäumte Haftklebemassen zum Gegenstand. Die Massen basieren auf einem Gemisch aus mindestens einem Styrolblockcopolymer und einem Polyarylenoxid. Sie enthalten Hohlräume, die von expandierenden polymeren Mikrosphären gebildet werden und die Kompressibilität der Massen erhöhen.

Nachteilig an den aus dem Stand der Technik bekannten Verfahren ist, dass thermisch empfindliche Stoffe oder Substanzen, insbesondere solche, die eine Zersetzungs- oder Reaktionstemperatur haben, die unterhalb der Expansionstemperatur der Mikroballons liegt, nicht verarbeitet werden können, da diese Substanzen sich während des Expansionsvorganges zersetzen bzw. während des Expansionsvorganges unkontrolliert reagieren würden.

Aufgabe der Erfindung ist es, die Nachteile des Standes der Technik zu überwinden, insbesondere ein Verfahren anzubieten, das es ermöglicht, thermisch empfindliche Substanzen in eine geschäumte Haftklebemasse einzuarbeiten, bevorzugt ohne dass der Schäumungsgrad dadurch nachteilig beeinflusst wird.

Gelöst wird die Erfindung durch ein Verfahren, bei dem das Massesystem zunächst in einem ersten Schritt bei einer ersten Temperatur geschäumt wird und die thermisch empfindlichen Substanzen in einem folgenden Schritt bei einer zweiten, niedrigeren Temperatur als der ersten Temperatur zu dem Massesystem gegeben werden und bel dem das Massesystem eine Klebemasse, insbesondere eine Selbstklebemasse, ist, umfasst oder als eine solche eingesetzt werden kann.

Vorteilhaft wird das Massesystem in einem ersten Schritt geschäumt, insbesondere durch Expansion von Mikroballons bei der hierzu erforderlichen Temperatur, und die thermisch empfindlichen Substanzen werden erst in einem folgenden Verfahrensschritt bei einer niedrigeren Temperatur, insbesondere also einer Temperatur, die unter der Expansionstemperatur der Mikroballons liegt, besonders vorteilhaft bei einer Temperatur, die für die thermisch empfindlichen Substanzen unkritisch ist, beizumischen.

Insbesondere in sofern ist es vorteilhaft, wenn die erste Temperatur, bei der das Massesystem geschäumt wird, der Expansionstemperatur der Mikroballons entspricht oder über dieser liegt, und wenn die zweite Temperatur, bei der die thermisch empfindlichen Substanzen zu dem Massesystem gegeben werden, unter der Expansionstemperatur der Mikroballons liegt.

Auch für thermisch sehr empfindliche Substanzen ist die erfindungsgemäße Vorgehensweise geeignet. Erreicht man beim Abkühlen auf eine niedrigere Temperatur keine Temperatur, die für die thermischen Substanzen bereist unkritisch ist, so kann die Zeit von der Zugabe der thermisch empfindlichen Substanzen bis zur Ausformung des Massesystems jedoch minimiert werden, so dass Nebenreaktionen, eine Zersetzung der thermisch empfindlichen Substanzen oder anderweitige, ungewollte Reaktionen dieser Substanzen auf ein Minimum reduziert werden können. Durch das erfindungsgemäße Verfahren kann vermieden werden, dass die thermisch empfindlichen Substanzen den Verfahrensschritt der Mikroballon-Expansion und den hierzu benötigten Temperaturbedingungen ausgesetzt werden.

Es war für den Fachmann überraschend und nicht vorhersehbar, dass es in dem zweiten Mischaggregat nicht zu einem Verlust der Schäumungsrate beim Abkühlen des Schaumes und bei der Zugabe der zusätzlichen Substanzen kommt. Durch die Abkühlung nimmt die Viskosität des Massesystems zu, so dass bei einer Verarbeitung in einem Mischaggregat mit einer erhöhten Scherung zu rechnen ist. Erwartungsgemäß führt die Verarbeitung geschäumter Massesysteme in Mischaggregaten bei geschäumten Massesystemen bei niedrigen Temperaturen daher zu einer "Zerschlagung" des Schaumes und somit zu einer signifikanten Abnahme des Schäumungsgrades.

Es hat sich überraschenderweise gezeigt, dass mit Mikroballons geschäumte Klebemassesysteme eine Verarbeitung nach Abkühlung in einem System, in dem die Masse einer Scherung unterliegt, insbesondere in einem Mischaggregat, gut überstehen. Hierdurch wurde es ermöglicht, wärmeempfindliche Additive in einem der Schäumung nachgeschalteten Verfahrensschritt beizumischen, ohne dass es zu einer signifikanten Abnahme des Schäumungsgrades kommt.

Erfindungsgemäß ist es möglich, die Abkühlung des Massesystems und die Zumischung der wärmeempfindlichen Substanzen in demselben Mischaggregat vorzunehmen, in dem bereits die Vermischung des Massesystems mit den noch nicht expandierten Mikroballons durchgeführt wurde.

Das erfindungsgemäße Verfahren eröffnet einen Weg, dass geschäumte Klebemassesysteme, also auch nach Expansion der Mikroballons, weiterverarbeitet werden können. Dass heißt, es können insbesondere zusätzliche thermisch sensitive Zusatzstoffe, Füllstoffe oder Additive, wie zum Beispiel Duftstoffe oder Vernetzerkomponenten, eingearbeitet werden, ohne die in der Polymermatrix enthaltenden expandierten Mikroballons zu zerstören.

Mit dem erfindungsgemäßen Verfahren ist es insbesondere gelungen, die thermische Vernetzung für geschäumte Klebemassesysteme wie beispielsweise geschäumte Selbstklebemassen zugänglich zu machen, bei den die Schäumung mittels zufuhr thermischer Energie realisiert wird, ohne dass das Massesystem im Prozess unkontrolliert vernetzt.

Somit kann also der Expansionsvorgang vom Vernetzungsprozess entkoppelt werden. Dass heißt, die Wahl des Vernetzungssystems kann völlig unabhängig von der Wahl des zu expandierenden Mikroballontyps erfolgen und umgekehrt.

Mikroballons

Bei Mikroballons handelt es sich um elastische Hohlkugeln, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind. Durch ein Einwirken auf die Mikroballons, insbesondere durch eine Wärmeeinwirkung erweicht einerseits die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich wie zum Beispiel von der Firma Akzo Nobel die Expancel DU-Typen (dry unexpanded), welche sich im Wesentlichen über ihre Größe (6 bis 45 $\mu$m Durchmesser im unexpandierten Zustand) und ihre zur Expansion benötigten Starttemperatur (75 bis 220 °C) differenzieren. Wenn der Mikroballontyp beziehungsweise die Schäumungstemperatur auf das zur Massecompoundierung benötigte Temperaturprofil und die Maschinenparameter abgestimmt ist, können Massecompoundierung und Schäumung auch gleichzeitig in einem Schritt erfolgen.

Weiterhin sind unexpandierte Mikroballontypen auch als wässrige Dispersion mit einem Feststoff- beziehungsweise Mikroballonanteil von ca. 40 bis 45 Gew.-% erhältlich, weiterhin auch als polymergebundende Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Schäumung von Klebemassen entsprechend des erfindungsgemäßen Verfahrens geeignet.

Massebasis

Das Klebemassesystem ist besonders bevorzugt eine Selbst- oder Haftklebemasse.

Mit den erfindungsgemäßen Verfahren sind grundsätzlich alle vorbekannten und in der Literatur beschriebenen Komponenten von Klebemassen, insbesondere selbstklebende, lösemittelfrei verarbeitbar.

Die Auswahl einer geeigneten Klebemassebasis zur Ausübung des erfindungsgemäßen Verfahrens ist unkritisch. Sie kann aus der Gruppe der thermoplastischen Elastomere beinhaltend Natur- und Synthesekautschuke einschließlich Blockcopolymere und deren Blends gewählt sein, aber ebenso aus der Gruppe der so genannten Polyacrylatklebemassen.

Als Klebemassen können weiterhin solche auf Basis von Polyurethan, Silikonkautschuken und/oder Polyolefinen eingesetzt werden.

Auch Mischsysteme unterschiedlich basierender Klebemassen (Blends basierend auf zwei oder mehreren der folgenden chemischen Verbindungsklassen: Natur- und Synthesekautschuke, Polyacrylate, Polyurethanen, Silikonkautschuken, Polyolefinen und/oder anderen; und/oder Copolymere der entsprechenden Monomere der vorstehenden Polymerklassen und/oder weiteren Monomeren) sind erfindungsgemäß einsetzbar.

Vorteilhafterweise ist die Basis für die kautschukbasierenden Klebemassen ein nichtthermoplastisches Elastomer gewählt aus der Gruppe der Naturkautschuke oder der Synthesekautschuke oder besteht aus einem beliebigen Blend aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können thermoplastische Elastomere als Basis für die Klebemasse gewählt werden. Stellvertretend genannt seien an dieser Stelle die Styrolblockcopolymere und vor allem die Styrol-Isopren-Styrol (SIS)- und Styrol-Butadien-Styrol (SBS)-Typen.

Weiterhin vorzugsweise kann die Klebemasse auch aus der Gruppe der Polyacrylate gewählt sein.

Dabei ist es vorteilhaft, wenn zumindest ein Teil der Monomere funktionelle Gruppen aufweist, die in einer thermischen Vernetzungsreaktion reagieren können und/oder eine thermische Vernetzungsreaktion fördern.

Für das erfindungsgemäße Verfahren wird vorzugsweise ein Polyacrylat eingesetzt, welches auf die folgende Eduktmischung, enthaltend insbesondere weich machende Monomere, weiterhin Monomere mit funktionellen Gruppen, die in der Lage sind, mit den Vernetzersubstanzen oder einem Teil der Vernetzersubstanzen Reaktionen einzugehen, insbesondere Additions- und/oder Substitutionsreaktionen, sowie optional weitere einpolymerisierbnare Comonomere, insbesondere hartmachende Monomere. Die Natur des herzustellenden Polyacrylats (Haftklebemasse; Heißsiegelmasse, viskoelastisches nichtklebriges Material und dergleichen) lässt sich insbesondere über eine Variation der Glasübergangstemperatur des Polymers durch unterschiedliche Gewichtsanteile der einzelnen Monomere beeinflussen. Für rein kristalline Systeme gibt es am Schmelzpunkt $T_S$ ein thermisches Gleichgewicht zwischen Kristall und Flüssigkeit. Amorphe oder teilkristalline Systeme sind hingegen durch die Umwandlung der mehr oder weniger harten amorphen bzw. teilkristallinen Phase in eine weichere (gummiartige bis zähflüssige) Phase gekennzeichnet. Am Glaspunkt kommt es insbesondere bei polymeren Systemen zum "Auftauen" (bzw. "Einfrieren" beim Abkühlen) der Brownschen Molekularbewegung längerer Kettensegmente.

Der Übergang vom Schmelzpunkt $T_S$ (auch "Schmelztemperatur"; eigentlich nur für reinkristalline Systeme definiert; "Polymerkristalle") zum Glasübergangspunkt $T_G$ (auch "Glasübergangstemperatur", "Glastemperatur") kann daher als fließend angesehen werden, je nach dem Anteil der Teilkristallinität der untersuchten Probe.

Im Rahmen dieser Schrift wird im Sinne der vorstehenden Ausführen bei der Angabe des Glaspunktes der Schmelzpunkt mit umfasst, es wird also als Glasübergangspunkt (oder gleichbedeutend auch als Glasübergangstemperatur) auch der Schmelzpunkt für die entsprechenden "schmelzenden" Systeme verstanden. Die Angaben der Glasübergangstemperaturen beziehen sich auf die Bestimmung mittels dynamisch mechanischer Analyse (DMA) bei geringen Frequenzen.

Zur Erzielung von Polymeren, beispielsweise Haftklebemassen oder Heißsiegelmassen, mit gewünschten Glasübergangstemperaturen wird die mengenmäßige Zusammensetzung der Monomermischung vorteilhaft derart gewählt, dass sich nach einer Gleichung (G1) in Analogie zur Fox-Gleichung (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Bevorzugt wird ein Polyacrylat eingesetzt, dass auf die folgende Monomerzusammensetzung zurückgeführt werden kann:

a) Acrylsäureester und/oder Methacrylsäureester der folgenden Formel

$$CH_2 = C(R^I)(COOR^{II})$$

wobei $R^I$ = H oder $CH_3$ und $R^{II}$ ein Alkylrest mit 4 bis 14 C-Atomen ist,
b) olefinisch ungesättigte Monomere mit funktionellen Gruppen der für eine Reaktivität mit den Vernetzersubstanzen oder einem Teil der Vernetzersubstanzen bereits definierten Art,
c) optional weitere Acrylate und/oder Methacrylate und/oder olefinisch ungesättigte Monomere, die mit der Komponente (a) copolymerisierbar sind.

Zur Anwendung des Polyacrylats als Haftkleber sind die Anteile der entsprechenden Komponenten (a), (b), und (c) derart gewählt, dass das Polymerisationsprodukt insbesondere eine Glastemperatur ≤ 15 °C (DMA bei geringen Frequenzen) aufweist.

Es ist zur Herstellung von Haftklebemassen sehr vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc).

Für die Anwendung eines Heißschmelzklebers, also eines Materials, welches erst durch Erwärmen haftklebrig wird, werden die Anteile der entsprechenden Komponeten (a), (b), und (c) insbesondere derart gewählt, dass das Copolymer eine Glasübergangstemperatur ($T_G$) zwischen 15 °C und 100 °C aufweist, bevorzugt zwischen 30 °C und 80°C, besonders bevorzugt zwischen 40°C und 60°C. Die Anteile der Komponenten (a), (b), und (c) sind entsprechend zu wählen.

Ein viskoelastisches Material, was beispielsweise typischerweise beidseitig mit haftklebrigen Schichten kaschiert sein kann, hat insbesondere eine Glasübergangstemperatur ($T_G$) zwischen - 50 °C bis +100 °C, bevorzugt zwischen -20 °C bis + 60°C, besonders bevorzugt 0°C bis 40°C. Die Anteile der Komponenten (a), (b), und (c) sind auch hier entsprechend zu wählen.

Die Monomere der Komponente (a) sind insbesondere weichmachende und/oder unpolare Monomere. Vorzugsweise werden für die Monomere (a) Acrylmonomere eingesetzt, die Acryl- und Methacrylsäureester mit Alkylgruppen, bestehend aus 4 bis 14 C-Atomen, bevorzugt 4 bis 9 C-Atomen, umfassen. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigten Isomere, wie z. B. 2-Ethylhexylacrylat, 2-Ethylhexylmethacrylat.

Die Monomere der Komponente (b) sind insbesondere olefinische ungesättigter Monomere (b) mit funktionellen Gruppen, insbesondere mit funktionellen Gruppen, die eine Reaktion mit den Epoxidgruppen eingehen können.

Bevorzugt werden für die Komponente (b) Monomere mit solchen funktionellen Gruppen eingesetzt, die aus der folgenden Aufzählung ausgewählt sind: Hydroxy-, Carboxy-, Sulfonsäure-, oder Phosphonsäuregruppen, Säureanhydride, Epoxide, Amine. Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itasconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Prinzipiell können im Sinne der Komponente (c) alle vinylisch-funktionalisierten Verbindungen eingesetzt werden, die mit der Komponente (a) und/oder der Komponente (b) copolymerisierbar sind, und können auch zur Einstellung der Eigenschaften der resultierenden Haftklebemasse dienen.

Beispielhaft genannte Monomere für die Komponente (c) sind:

Methylacrylat, Ethylacrylat, Propylacrylat, Methylmethacrylat, Ethylmethacrylat, Benzylacrylat, Benzylmethacrylat, sec.-Butylacrylat, tert-Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxy-ethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufuryl-acrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid, weiterhin N,N-Dialkyl-substituierte Amide, wie beispielsweise N,N-Dimethylacrylamid, N,N-Dimethylmethacrylamid, N-Benzylacrylamide, N-Isopropylacrylamid, N-tert-Butylacrylamid, N-tert-Octylacrylamid, N-Methylolacrylamid, N-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, $\alpha$- und p-Methylstyrol, $\alpha$-Butylstyrol, 4-n-Butylstyrol, 4-n-Decylstyrol, 3,4-Dimethoxystyrol. Makromonomere wie 2-Polystyrolethylmethacrylat (Molekulargewicht Mw von 4000 bis 13000 g/mol), Poly(Methylmethacrylat)ethylmethacrylat (Mw von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind z.B. Benzoinacrylat und acrylatfunktlonallsierte Benzophenonderivate. Monomere, die eine Vernetzung durch Elektronenbestrahlung unterstützen sind, z.B. Tetrahydrofufurylacrylat, N-tert-Butylacrylamid, Allylacrylat wobei diese Aufzählung nicht abschließend ist.

Das Klebemassesystem kann weiterhin derart gewählt sein, dass es als Tragerschichtinsbesondere für ein Klebeband - eingesetzt werden kann. Die vorgenannten Ausführungen zur chemischen Beschaffenheit gelten hierfür analog.

Additive

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen.

Als Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate, niedermolekulare Polyacrylate, wasserlösliche Weichmacher, Weichharze, Phosphate, Polyphosphate, Citrate.

Optional können auch pulver- und granulatförmige Füllstoffe, Farbstoffe und Pigmente, besonders auch abrasive und verstärkende, wie z.B. Kreiden ($CaCO_3$), Titandioxide, Zinkoxide und Ruße zugesetzt werden. Sehr bevorzugt können verschiedene Kreideformen als Füllstoff eingesetzt werden, wobei besonders bevorzugt Mikrosöhl-Kreide eingesetzt wird.

Weiterhin können schwerentflammbare Füllstoffe, wie beispielsweise Ammoniumpolyphosphat, weiterhin elektrisch leitfähige Füllstoffe (wie beispielsweise Leitruß, Kohlenstofffasern und/oder silberbeschichtete Kugeln), weiterhin thermisch leitfähige Materialien (wie beispielsweise Bornitrid, Aluminiumoxid, Siliciumcarbid), weiterhin ferromagnetische Additive (wie beispielsweise Eisen-(III)-oxide), weiterhin Additive zur Volumenerhöhung, insbesondere zur Herstellung geschäumter Schichten, (wie beispielsweise Blähmittel, Glasvollkugeln, Glashohlkugeln, Mikrokugeln aus anderen Materialien, Kieselsäure, Silikate, organisch nachwachsende Rohstoffe, beispielsweise Holzmehl, organische und/oder anorganische Nanopartikel, Fasern), weiterhin Alterungsschutzmitteln, Lichtschutzmitteln, Ozonschutzmitteln, Compoundierungsmittel und/oder Blähmittel zugegeben oder eincompoundiert werden. Als Alterungsschutzmittel können bevorzugt sowohl primäre, z.B. 4-Methoxyphenol, als auch sekundäre Alterungsschutzmittel, z.B. Irgafos® TNPP der Fa. Ciba Geigy, auch in Kombination miteinander eingesetzt werden. Hier soll nur an dieser Stelle auf weitere entsprechenden Irganox® Typen der Fa. Ciba Geigy bzw. Hostano® der Firma Clariant verwiesen werden. Als weitere hervorragende Mittel gegen Alterung können Phenothiazin (C-Radikalfaenger) sowie Hydrochinonmethylether in Gegenwart von Sauerstoff sowie Sauerstoff selbst eingesetzt werden.

Thermisch empfindliche Substanzen

Thermisch empfindliche Substanzen können beispielsweise Vernetzersubstanzen und/oder Vernetzerbeschleunigersubstanzen sein, die für eine thermische Vernetzung des Massesystems (der Klebemasse bzw. Haftklebemasse) verwendet werden sollen. Solche Substanzen würden bei den Temperaturen, wie sie für die Expansion der Mikroballons nötig sind, bereits zu einer unkontrollierbaren Vernetzungsreaktion ("Vergelung") im Mischaggregat führen, die je nach Grad der unkontrollierbaren Vernetzung zur Klümpchenbildung bis hin zur vollständigen Verklumpung führen kann. Eine Ausformung des Massesystems, insbesondere eine gleichmäßige und homogene Beschichtung, wie dies für Klebemassen und Haftklebemassen wichtig ist, kann dann nicht mehr durchgeführt werden, und das Massesystems verliert bei einem zu hohen Vernetzungsgrad jegliche Eignung als Haft- oder Selbstklebemasse.

Thermisch empfindliche Substanzen können weiterhin beispielsweise Farb- oder Duftstoffe sein, insbesondere solche, die sich bei erhöhten Temperaturen zersetzen oder anderweitig ihre Farb- bzw. Dufteigenschaften verlieren. Es ist auch möglich, dass das Vernetzersystem aus thermisch empfindlichen und thermisch unempfindlichen Komponenten besteht, so können beispielsweise die eigentlichen Vernetzer thermisch unempfinlich sein, die Vernetzerbeschleuniger aber thermisch empfindlich, oder umgekehrt. Zum Zwecke der thermisch induzierten chemischen Vernetzung sind bei dem erfindungsgemäßen Verfahren alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Die Vernetzer sind vorteilhaft solche, die bei Temperaturen über 50 °C aktivierbar sind, insbesondere bei Temperaturen von 100 °C bis 160 °C, ganz besonders bevorzugt bei Temperaturen von 110 °C bis 140 °C. Die thermische Anregung der Vernetzer kann zum Beispiel durch Prozesswärme (aktive Temperierung, Scherwärme), IR-Strahlen oder hochenergetische Wechselfelder erfolgen.

In einer sehr vorteilhaften Ausführungsform ist der zugesetzte thermische Vernetzer ein Isocyanat, bevorzugt ein trimerisiertes Isocyanat. In besonders bevorzugter Weise sind die trimerisierten Isocyanate aliphatische und/oder mit Aminen deaktivierte Isocyanate. Geeignete Isocyanate sind beispielsweise trimerisierte Derivate von MDI [4,4-Methylendi(phenylisocyanat)], HDI [1,6-Hexylendiisocyanat] und/oder IPDI [Isophorondiisocyanat, 5-Isocyanato-1-isocyanatomethyl-1,3,3-trimethyl-cyclohexan] sowie - insbesondere trimerisierte - Polyisocyanate und/oder polyfunktionelle Isocyanate und/oder polyfunktionelle Polyisocyanate. Hier sein insbesondere verwiesen auf thermische Vernetzer, die in der WO 2006/027387 A1 als vorteilhaft herausgestellt werden.

Weiterhin kann sehr vorteilhaft ein Vernetzer-Beschleuniger-System für die thermische Vernetzung insbesondere von Polyacrylaten eingesetzt werden, umfassend zumindest eine epoxidgruppenhaltige Substanz - als Vernetzer - und zumindest eine bei einer Temperatur unterhalb der Schmelztemperatur des Polyacrylates, insbesondere bei Raumtemperatur, für die Verknüpfungsreaktion beschleunigend wirkende Substanz ("Beschleuniger"); insbesondere multifunktionelle Amine. Dabei wird das Vernetzer-Beschleuniger-System insbesondere in Gegenwart von funktionellen Gruppen in den Massebausteinen eingesetzt, die mit Epoxidgruppen eine Verknüpfungsreaktion, insbesondere in Form einer Addition oder Substitution, eingehen können. Bevorzugt kommt es bei der thermischen Vernetzung also zu einer Verknüpfung der die funktionellen Gruppen tragenden Bausteine mit den die Epoxidgruppen tragenden Bausteinen (insbesondere im Sinne einer Vernetzung der entsprechenden die funktionellen Gruppen tragenden Polymerbausteine über die Epoxidgruppen tragenden Substanzen als Verknüpfungsbrücken). Beschleunigend wirkende Substanz bedeutet, dass die Substanz die Vernetzungsreaktion in sofern unterstützt, dass sie für eine erfindungsgemäß hinreichende Reaktionsgeschwindigkeit sorgt, während die Vernetzungsreaktion in Abwesenheit des Beschleunigers bei ausgewählten Reaktionsparametern, hier insbesondere einer Temperatur, die unterhalb der Schmelztemperatur der Polyacrylate liegt, nicht oder nur unzureichend langsam ablaufen würde. Der Beschleuniger sorgt also für eine wesentliche Verbesserung der Reaktionskinetik der Vernetzungsreaktion. Dies kann erfindungsgemäß auf katalytische Weise, aber auch durch Einbindung in das Reaktionsgeschehen erfolgen. Insbesondere sei verwiesen auf Vernetzer-Beschleuniger-Systeme, wie sie in der DE 10 2007 016 950 A1 aufgezeigt werden.

Träger

Als Trägermaterial für das ein- oder doppelseitig klebende Klebeband können alle bekannten textilen Träger wie eine Schlingenware, ein Velour, ein Gelege, ein Gewebe, ein Gewirke, insbesondere ein PET-Filamentgewebe oder ein Polyamid-Gewebe, oder ein Vlies eingesetzt werden, wobei unter "Vlies" zumindest textile Flächengebilde gemäß EN 29092 (1988) sowie Nähwirkvliese und ähnliche Systeme zu verstehen sind. Ebenfalls können Abstandsgewebe und -gewirke mit Kaschierung verwendet werden. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Die durch die Partikelschicht hindurchgenadelten Haltefasern halten die Deckschicht und die Unterlagsschicht in einem Abstand voneinander und sie sind mit der Deckschicht und der Unterlagsschicht verbunden. Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Mayer, ehemals Malimo, hergestellt und sind unter anderem bei den Firmen Naue Fasertechnik und Techtex GmbH beziehbar. Ein Malivlies ist dadurch gekennzeichnet, dass ein Querfaservlies durch die Bildung von Maschen aus Fasern des Vlieses verfestigt wird.

Als Träger kann weiterhin ein Vlies vom Typ Kunitvlies oder Multiknitvlies verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt.

Schließlich sind auch Nähvliese als Vorprodukt geeignet, ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt. Sodann ist das Caliweb® hervorragend geeignet. Das Caliweb® besteht aus einem thermisch fixierten Abstandsvliesstoff Multiknit mit zwei außenliegenden Maschenschichten und einer innenliegenden Polschicht, die senkrecht zu den Maschenschichten angeordnet sind. Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 % und 50 % der Fasern des Vlieses Schmelzfasern sind, insbesondere zwischen 5 % und 40 % der Fasern des Vlieses.

Ein derartiges Vlies ist dadurch gekennzeichnet, dass die Fasern nass gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.

In einem zweiten Schritt erfolgt die Thermofixierung, wobei die Festigkeit des Vlieses durch das Auf- oder Anschmelzen der Schmelzfasern nochmals erhöht wird.

Die Verfestigung des Vliesträgers lässt sich auch ohne Bindemittel beispielsweise durch Heißprägen mit strukturierten Walzen erreichen, wobei über Druck, Temperatur, Verweilzeit und die Prägegeometrie Eigenschaften wie Festigkeit, Dicke, Dichte, Flexibilität u.ä. gesteuert werden können.

Als Ausgangsmaterialien für die textilen Träger sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden. Insbesondere verschleißfeste Polymere wie Polyester, Polyolefine, Polyamide oder Glas- oder Carbonfasern Verwendung.

Als Trägermaterial eignen sich auch Träger aus Papier (gekreppt und/oder ungekreppt), aus einem Laminat, aus einer Folie (zum Beispiel Polyethylen-, Polypropylen-, mono- oder biaxial orientierte Polypropylenfolien, Polyester-, PA-, PVC- und andere Folien), oder aus bahnförmigen Schaumstoffen (beispielsweise aus Polyethylen und Polyurethan).

Auf der Streichseite können die Oberflächen der Träger chemisch oder physikalisch vorbehandelt sein, sowie die Rückseite derselben einer antiadhäsiven physikalischen Behandlung oder Beschichtung unterzogen sein.

Schließlich kann das bahnförmige Trägermaterial ein beidseitig antiadhäsiv beschichtetes Material sein wie ein Trennpapier oder eine Trennfolie, auch Liner genannt.

Verfahren

Die Einbringung der expandierbaren, aber noch nicht expandierten Mikroballons in das Massesystem kann insbesondere erfolgen, indem die Mikroballons mit den weiteren Bestandteilen, die zur Bildung des Massesystems erforderlich sind, vermischt werden (insbesondere sind dies die Polymere und gegebenenfalls Harze und/oder Füllstoffe). Die Mikroballons können aber auch zu dem bereits aufgeschmolzenen Massesystem gegeben werden.

In dieser Phase des Verfahrens können - insbesondere für den Fall, dass die empfindlichen Substanzen thermische Vernetzer sind oder ein thermischen Vernetzersystem darstellen oder umfassen - Komponenten - insbesondere eben dieses Vernetzersystems - zugegeben werden, die in dieser Phase noch nicht thermisch reagieren, beispielsweise weil eine weitere Komponente des Systems hier noch nicht vorliegt. Entsprechend ist es möglich, in dieser Phase bereits Vernetzer zuzugeben, die erst in Anwesenheit von Beschleunigersubstanzen in wesentlichem Umfang reagieren.

Es ist von Vorteil - insbesondere im Fall der Zugabe thermischer Vernetzer oder eines thermischen Vernetzersystems - wenn das Massesystem bei der Zugabe der thermisch vernetzten Substanzen in einem unvernetzten Zustand oder in einem Zustand nur sehr geringer Vernetzung vorliegt. Hierdurch ist eine gute Ausformung der Masse möglich.

Als Mischaggregate eigenen sich insbesondere kontinuierlich arbeitende Mischaggregat, wie zum Beispiel einem Planetwalzenextruder.

In diesem Extruder können die Komponenten zur Herstellung des Massesystens vorgelegt werden und insbesondere aufgeschmolzen werden. Es besteht erfindungsgemäß die Möglichkeit, vorgefertigte lösemittelfreie Masse durch Förderextruder, wie zum Beispiel Einschneckenextruder, oder durch eine Fassschmelze in das Maischaggregat, insbesondere den Planetwalzenextruder, mittels Einspritzung vorzulegen und die Mikroballons im Einzugsbereich des Planetwalzenextruders dazuzudosieren.

Mikroballons geschäumte Massen müssen in der Regel vor der Beschichtung nicht entgast werden, um einen gleichmäßiges, geschlossenes Beschichtungsbild zu erhalten. Die expandierenden Mikroballons verdrängen die während der Compoundierung in die Klebemasse eingeschlossene Luft. Bei hohen Durchsätzen ist es dennoch ratsam, die Massen vor der Beschichtung zu entgasen, um eine gleichmäßige Massevorlage im Walzenspalt zu erhalten. Die Entgasung erfolgt idealerweise unmittelbar vor dem Walzenauftragswerk bei Mischtemperatur und einem Differenzdruck zum Umgebungsdruck von mindestens 200 mbar.

Erfindungsgemäß ist es möglich, die Abkühlung des Massesystems nach der Expansion der Mikroballons und die Zumischung der wärmeempfindlichen Substanzen in demselben Mischaggregat vorzunehmen, in dem bereits die Vermischung des Massesystems mit den noch nicht expandierten Mikroballons durchgeführt wurde. Dieser Vorgang kann erfindungsgemäß aber auch in einem zweiten Mischaggregat stattfinden.

Die Ausformung des abgemischten Massesystems kann insbesondere zu einer Schicht erfolgen, insbesondere vorteilhaft findet dieser Schritt in einem Walzenauftragswerk statt. Grundsätzlich lassen sich aber auch anders geformte geschäumte Körper ausformen. Insbesondere für den Fall, dass es sich bei dem Massesystem um eine Selbstklebemasse handelt, können auf diese Weise Selbstklebebänder hergestellt werden. Hierzu ist es insbesondere vorteilhaft, wenn die Selbstklebemasse auf ein bahnförmiges Träger- oder Releasematerial aufgebracht wird.

Das aufgeschäumte und mit thermisch empfindlichen Substanzen versehene Massesystem wird in einer vorteilhaften Vorgehensweise thermisch vernetzt; insbesondere wenn die thermisch empfindlichen thermische Vernetzer und/oder Beschleuniger sind oder ein thermisches Vernetzersystem darstellen oder die vorgenannten Komponenten umfassen. Die thermische Vernetzung kann insbesondere vorteilhaft nach der Ausformung zur Schicht, insbesondere auf einem Träger- oder Releasematerial, stattfinden.

Das erfindungsgemäße Verfahren wird im folgenden anhand von zwei vorteilhaften Ausführungsvarianten näher erläutert, ohne sich durch die Wahl der dargestellten Verfahrensvarianten unnötig beschränken zu wollen.

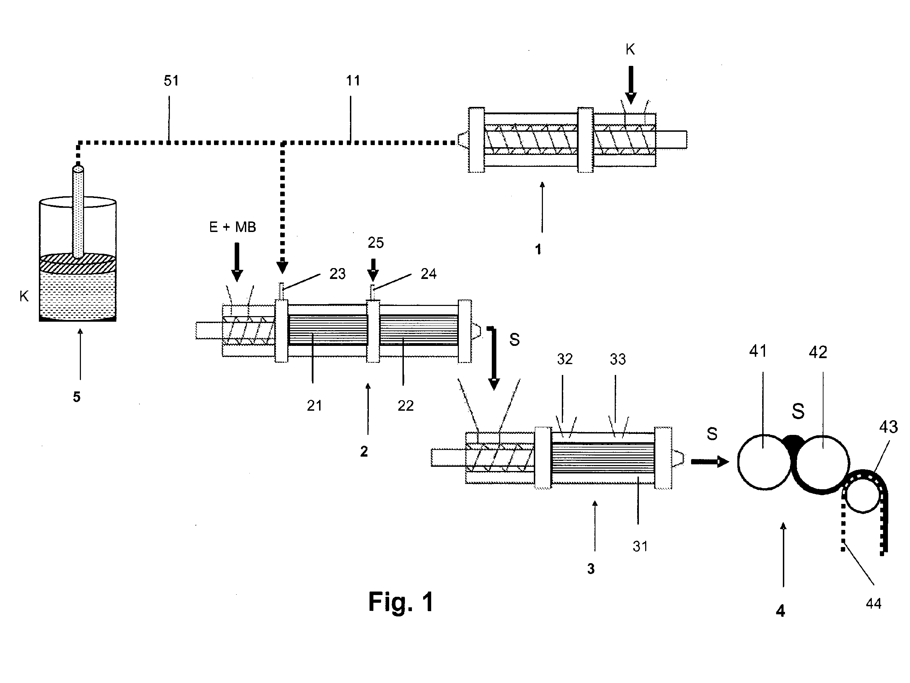

Eine erste sehr vorteilhafte Vorgehensweise ist durch einen Verfahrensablauf (vgl. auch Fig. 1) gekennzeichnet, bei dem

- in einem ersten Mischaggregat zunächst expandierbare Mikroballons - und gegebenenfalls weitere Additive - in ein Massesystem eingebracht werden;
- das mit den Mikroballons versetzte Massesystem - insbesondere unter Überdruck-auf eine Temperatur, die mindestens der Expansionstemperatur der Mikroballons bei Normaldruck entspricht, vorteilhaft höher Ist als diese, erhitzt wird,
- die Mikroballons insbesondere beim Austritt aus dem ersten Mischaggregat expandiert werden,
- das Massesystem in ein zweites Mischaggregat eingebracht wird, so dass in diesem zweiten Mischaggregat das Massesystem bei einer Temperatur vorliegt, die unter der Expansionstemperatur der Mikroballons liegt,
- die thermisch empfindlichen Substanzen in dem zweiten Mischaggregat zugegeben werden,
- das derart abgemischte Massesystem ausgeformt wird.

Die Abkühlung des Massesystems auf eine Temperatur, die unter der Expansionstemperatur der Mikroballons liegt, findet dabei während der Überführung des Massesystems in das zweite Michaggregat und/oder nach der Überführung in das zweite Mischaggregat statt. Entsprechend findet die Zugabe der empfindlichen Substanzen während und/oder nach der Abkühlung des Massesystems statt, insbesondere nach der Abkühlung.

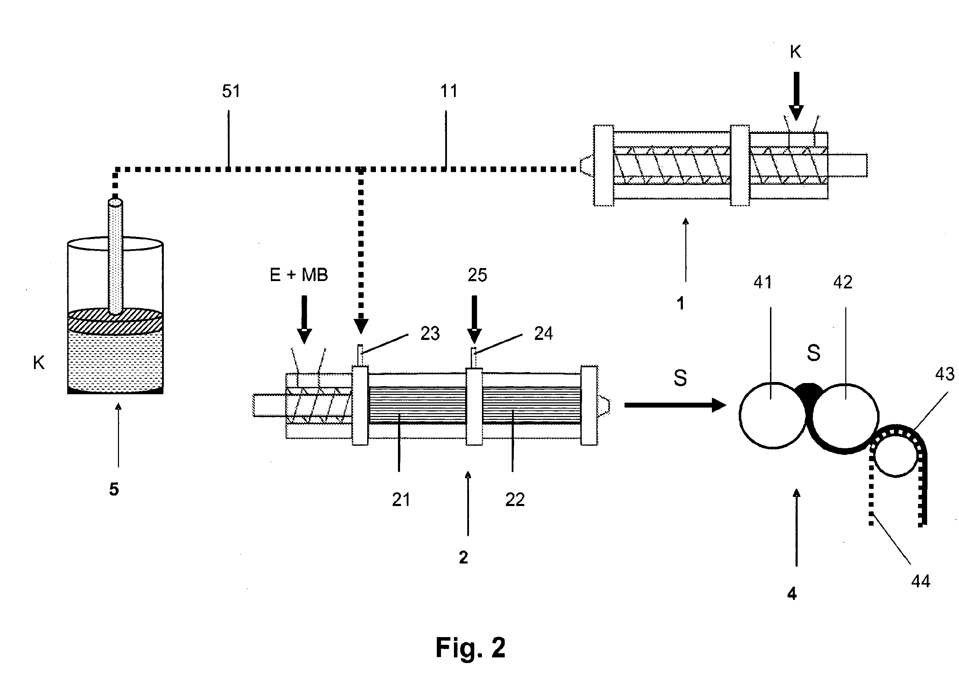

Eine weitere sehr vorteilhafte Vorgehensweise ist durch einen Verfahrensablauf (vgl. auch Fig. 2) gekennzeichnet, bei dem

- in einem ersten Mischaggregat zunächst expandierbare Mikroballons - und gegebenenfalls weitere Additive - in ein Massesystem eingebracht werden;
- das mit den Mikroballons versetzte Massesystem - insbesondere unter Überdruck-innerhalb einer ersten Mischzone des Mischaggregats auf eine Temperatur, die mindestens der Expansionstemperatur der Mikroballons bei Normaldruck entspricht, vorteilhaft höher ist als diese, erhitzt wird,
- das Massesystem nachfolgend aus der ersten Mischzone in eine zweite Mischzone des ersten Mischaggregats überführt wird, so dass in dieser zweiten Mischzone das Massesystem bei einer Temperatur vorliegt, die unter der Expansionstemperatur der Mikroballons liegt,
- die thermisch empfindlichen Substanzen bei der Überführung des Massesystems in die zweite Mischzone und/oder nach der Überführung in die zweite Mischzone zugegeben werden,
- das derart abgemischte Massesystem ausgeformt wird.

Die Abkühlung des Massesystems auf eine Temperatur, die unter der Expansionstemperatur der Mikroballons liegt, findet dabei während der Überführung des Massesystems in die zweite Mischzone und/oder nach der Überführung in die zweite Mischzone statt. Entsprechend findet die Zugabe der empfindlichen Substanzen während und/oder nach der Abkühlung des Massesystems statt, insbesondere nach der Abkühlung.

Im Folgenden werden die oben beschriebenen, innerhalb des Erfindungsgedankens liegenden Verfahren in besonders hervorragend ausgestalteten Varianten veranschaulicht, ohne sich durch die Wahl der abgebildeten Figuren unnötig beschränken zu wollen.

Es zeigen

Figur 1    das Verfahren mit zwei Mischaggregaten, wobei die Expansion der Mikroballons im ersten Mischaggregat stattfindet und anschließende Zugabe von thermisch sensitiven Additiven oder Füllstoffen im zweiten Mischaggregat

Figur 2    das Verfahren mit einem Mischaggregat, wobei die Expansion der Mikroballons und die Zugabe von thermisch sensitiven Additiven oder Füllstoffen in einem Mischaggregat stattfinden

In der Figur 1 ist ein besonders vorteilhaft gestaltetes Verfahren zur Herstellung eines geschäumten Massesystems gezeigt.

Die Edukte E, die das zu schäumende Massesystem bilden sollen, und die Mikroballons MB werden in ein kontinuierliches Mischaggregat, wie zum Beispiel einem Planetwalzenextruder (PWE) 2 aufgegeben

Es besteht aber auch die Möglichkeit, vorgefertigte lösemittelfreie Masse K durch Förderextruder, wie zum Beispiel einem Einschneckenextruder (ESE) 1 oder durch eine Fassschmelze 5 in den Planetwalzenextruder (PWE) 2 mittels Einspritzung 23 vorzulegen und die Mikroballons MB im Einzugsbereich des PWE 2 dazu zu dosieren. Die Mikroballons MB werden nun mit der lösungsmittelfreien Masse K oder mit den Edukten E zu einem homogenen Massesystem im PWE 2 vermischt und in der ersten Heiz- und Mischzone 21 des PWE 2 auf die Temperatur, die zur Expansion der Mikroballons notwendig ist, aufgeheizt.

Im zweiten Einspritzring 24 können in das expandierte Mikroballons enthaltendem Massesystem S weitere Additive oder Füllstoffe 25, wie zum Beispiel Vernetzungspromotoren hinzu gegeben werden.

Um thermisch sensitive Additive oder Füllstoffe 25 einarbeiten zu können, werden der Einspritzring 24 und die zweite Heiz- und Mischzone 22 vorzugsweise gekühlt.

Das geschäumte Massesystem wird anschließend in ein weiteres kontinuierliches Mischaggregat, wie zum Beispiel einem Doppelschneckenextruder (DSE) 3 übergeben und kann nun mit weiteren Füllstoffen oder Additiven, wie Vernetzungskomponenten, wie zum Beispiel Katalysatoren unter moderaten Temperaturen abgemischt werden ohne die expandierten Mikroballons MB zu zerstören.

Die Mikroballons MB durchbrechen am Düsenaustritt des DSEs 3, wie auch schon zuvor am Düsenaustritt des PWEs 2 die Masseoberfläche.

Mit einem Walzenauftragswerk 4 wird diese schaumartige Masse S kalandriert und auf ein bahnförmiges Trägermaterial 44 wie zum Beispiel Trennpapier beschichtet, teilweise kann noch eine Nachschäumung im Walzenspalt stattfinden. Das Walzenauftragswerk 4 besteht aus einer Rakelwalze 41 und einer Beschichtungswalze 42. An die letztere wird das Trennpapier 44 über eine Aufnahmewalze 43 geführt, so dass das Trennpapier 44 die geschäumte Masse S von der Beschichtungswalze 42 übernimmt.

Gleichzeitig werden die expandierten Mikroballons MB wieder in die Polymermatrix der geschäumten Masse S gedrückt, und somit eine glatte bzw. bei der Schäumung von Selbstklebemassen eine permanent (nicht reversibel) klebende Oberfläche bei sehr niedrigen Raumgewichten von bis zu 150 kg/m$^3$ erzeugt.

In der Figur 2 ist ein weiteres besonders vorteilhaft gestaltetes Verfahren zur Herstellung eines geschäumten Massesystems gezeigt.

Die Edukte E und die Mikroballons MB, die das zu schäumende Massesystem bilden sollen, werden in ein kontinuierliches Mischaggregat, wie zum Beispiel einem Planetwalzenextruder (PWE) 2 aufgegeben

Es besteht aber auch die Möglichkeit, vorgefertigte lösemittelfreie Masse K durch Förderextruder, wie zum Beispiel einem Einschneckenextruder (ESE) 1 oder durch eine Fassschmelze 5 in den Planetwalzenextruder (PWE) 2 mittels Einspritzung 23 vorzulegen und die Mikroballons MB im Einzugsbereich des PWE 2 dazu zu dosieren. Die Mikroballons MB werden nun mit der lösungsmittelfreien Masse K oder mit den Edukten E zu einem homogenen Massesystem im PWE 2 vermischt und in der ersten Heiz- und Mischzone 21 des PWE 2 auf die Temperatur, die zur Expansion der Mikroballons notwendig ist, aufgeheizt.

Im zweiten Einspritzring 24 können in das expandierte Mikroballons enthaltende Massesystem S weitere Additive oder Füllstoffe 25, wie zum Beispiel Vernetzungspromotoren hinzu gegeben werden.

Um thermisch sensitive Additive oder Füllstoffe 25 einarbeiten zu können, werden der Einspritzring 24 und die zweite Heiz- und Mischzone 22 gekühlt.

Die expandierten Mikroballons MB durchbrechen am Düsenaustritt des PWE 2 die Masseoberfläche.

Mit einem Walzenauftragswerk 4 wird diese schaumartige Masse S kalandriert und auf ein bahnförmiges Trägermaterial 44 wie zum Beispiel Trennpapier beschichtet, teilweise kann noch eine Nachschäumung im Walzenspalt stattfinden. Das Walzenauftragswerk 4 besteht aus einer Rakelwalze 41 und einer Beschichtungswalze 42. An die letztere wird das Trennpapier 44 über eine Aufnahmewalze 43 geführt, so dass das Trennpapier 44 die geschäumte Masse S von der Beschichtungswalze 42 übernimmt.

Gleichzeitig werden die expandierten Mikroballons MB wieder in die Polymermatrix der geschäumten Masse S gedrückt, und somit eine glatte bzw. bei der Schäumung von Selbstklebemassen eine permanent (nicht reversibel) klebende Oberfläche bei sehr niedrigen Raumgewichten von bis zu 150 kg/m$^3$ erzeugt.

Klebemasse / Klebeband

Gegenstand der Erfindung ist auch eine mit Mikroballons geschäumte, thermisch vernetzte Klebemasse, insbesondere Selbstklebemasse, erhalten nach dem erfindungsgemäßen Verfahren, wobei es sich bei den thermisch empfindlichen Substanzen oder einem Teil der thermisch empfindlichen Substanzen um thermische Vernetzer handelt.

Der Nutzen von geschäumten Klebemassen liegt einerseits in der Kostenreduktion. Es können Rohstoffe eingespart werden, da Masseaufträge bei gleichen Schichtdicken um ein Vielfaches verringert werden können. Zusätzlich können die Beschichtungsgeschwindigkeiten bei gleichem Durchsatz oder Mengenherstellung von Klebemasse erhöht werden.

Vorteil einer thermischen Vernetzung ist es, eine Klebemasse zu erhalten, die kein Vernetzungsprofil aufweist, insbesondere also bei Klebmassenschichten kein vernetzungsprofil durch die Schicht hindurch. Bei Vernetzung durch aktinische Bestrahlung kommt es aufgrund der begrenzen Eindringtiefe der Strahlen immer mehr oder weniger zu einem solchen Profil, dies um so mehr bei dicken Schichten, für die geschäumte Systeme häufig eingesetzt werden.

Weiterhin ergeben sich durch die Schäumung der Klebemasse verbesserte klebtechnische und anwendungstechnische Eigenschaften.

Die Verringerung des Klebkraftabfalls wird durch die hohe Oberflächengüte, welche durch das Zurückdrücken der expandierten Mikroballons in die Polymermatrix während des Beschichtungsvorgangs erzeugt wird, begünstigt.

Außerdem gewinnt die geschäumte Selbstklebemasse gegenüber der ungeschäumten Masse gleicher Polymerbasis zusätzliche Leistungsmerkmale, wie zum Beispiel eine verbesserte Schlagbeständigkeit bei Tieftemperaturen, gesteigerte Klebkraft auf rauen Untergründen, größere Dämpfungs- und/oder Abdichteigenschaften beziehungsweise Anschmiegsamkeit der Schaumklebemasse auf unebenen Untergründen, ein günstigeres Stauch-/Härteverhalten und verbessertes Kompressionsvermögen.

Die nähere Erläuterung der charakteristischen Eigenschaften beziehungsweise Zusatzfunktionen der erfindungsgemäßen Selbstklebemassen erfolgt teilweise in den Beispielen.

Eine geschäumte Klebemasse aus der bevorzugten Hotmeltklebemasse hat eine glatte klebende Oberfläche, da die expandierten Mikroballons während der Beschichtung im Walzenspalt nachträglich wieder in die Polymermatrix gedrückt werden, und weist folglich eine bevorzugte Oberflächenrauigkeit $R_a$ kleiner 10 $\mu$m auf. Die Bestimmung der Oberflächenrauigkeit eignet sich nur für Klebebänder, welche auf einem sehr glatten Träger basieren und selbst nur eine Oberflächenrauigkeit von $R_a$ kleiner 1 $\mu$m aufweisen. Bei in der Praxis relevanten Trägern, wie zum Beispiel gekreppten Papieren oder Vliesen und Geweben mit einer größeren Oberflächenrauigkeit eignet sich die Bestimmung der Oberflächenrauigkeit des Produktes demgemäß nicht zur Beschreibung der Verfahrensvorteile.

Der Anteil der Mikroballons in der Klebemasse liegt gemäß einer bevorzugten Ausführungsform der Erfindung zwischen größer 0 Gew.-% und 30 Gew.-%, insbesondere zwischen 0,5 Gew.-% und 10 Gew.-%.

Weiter vorzugsweise weisen die Mikroballons bei 25 °C einen Durchmesser von 3 $\mu$m bis 40 $\mu$m, insbesondere 5 $\mu$m bis 20 $\mu$m, und/oder nach Temperatureinwirkung einen Durchmesser von 20 $\mu$m bis 200 $\mu$m, insbesondere 40 $\mu$m bis 100 $\mu$m, auf.

In allen bisher bekannten Verfahren zur Herstellung von mit Mikroballons geschäumten Klebemassesystemen bildet sich eine raue, nur wenig oder nicht klebende Oberfläche der Klebemasse aus.

Schon ab einem geringen Mikroballongehalt von 0,5 Gew.-% lassen sich bei einer Selbstklebemasse, die aus Lösungsmittel beschichtet ist, Klebkraft(Schälkraft)verluste größer 40 % erzielen. Mit steigendem Mikroballongehalt sinken die Klebkräfte noch weiter und die Kohäsion erhöht sich.

Bereits bei einem Anteil von nur 1 Gew.-% Mikroballons ist die Adhäsion der Klebemasse sehr gering.

Dies untermauern die Vergleichsbeispiele Nr.1.1 und 1.2 beziehungsweise Tabelle 3.

Das Verhältnis des Raumgewichts der durch die Mikroballons geschäumten Klebemasse zum Raumgewicht der flächengewichts- und rezepturidentischen Klebemasse, die durch die Zerstörung der durch die expandierten Mikroballons entstandenen Hohlräume entschäumt ist, ist bevorzugt kleiner 0,9.

Dieses Verhalten zeigt sich auch bei lösungsmittelfreier Düsenbeschichtung, wobei die Mikroballons nach Austritt aus dem Extruder/ Düse bei Druckausgleich aufschäumen und die Klebmassenmatrix durchbrechen.

Des Weiteren ist vom Erfindungsgedanken auch ein Selbstklebeband umfasst, das unter Zuhilfenahme der Klebemasse hergestellt wird, indem auf ein bahnförmiges Material zumindest einseitig die Klebemasse aufgetragen wird. In einem doppelseitig klebend ausgerüsteten Klebeband können beide Klebebeschichtungen erfindungsgemäß sein. Alternativ ist vorgesehen, dass nur eine der beiden Beschichtungen erfindungsgemäß ist, während die zweite beliebig wählbar ist (angepasst an die zu erfüllenden Aufgaben des Klebebands).

Bevorzugt wird als Trägermaterial eine Folie, ein Gewebe oder ein Papier, auf das einseitig die (Selbst-)Klebemasse aufgebracht wird.

Weiterhin wird bevorzugt die (Selbst-)Klebemasse auf einem Trennpapier oder einer Trennfolie aufgebracht, woraus ein trägerloses Klebeband resultiert, auch kurz Fix genannt.

Die Dicke der Klebemasse in einem Klebeband auf dem bahnförmigen Trägermaterial kann zwischen 20 $\mu$m und 3000 $\mu$m betragen, vorzugsweise zwischen 40 $\mu$m und 150 $\mu$m.

Des Weiteren kann die Klebemasse in einer Dicke von 20 $\mu$m bis 3000 $\mu$m auf einem Releasematerial aufgetragen sein, wenn die Klebmassenschicht, insbesondere nach Vernetzung, als trägerloses doppelseitig klebendes Selbstklebeband eingesetzt werden soll.

Ein weiterer Gegenstand der Erfindung ist die Verwendung einer erfindungsgemäßen geschäumten Klebemasse als Selbstklebemasse für ein ein- oder doppelseitiges klebendes Klebeband.

**Experimentelle Untersuchungen**

Folgende Prüfmethoden werden angewandt, um auch in den Beispielen die angegeben Messwerte zu bestimmen.

Prüfmethoden

Bestimmung der Oberflächenrauheit

Das PRIMOS System besteht aus einer Beleuchtungseinheit und einer Aufnahmeeinheit. Die Beleuchtungseinheit projiziert mit Hilfe eines digitalen Mikro-Spiegel-Projektors Linien auf die Oberfläche. Diese projizierten, parallelen Linien werden durch die Oberflächenstruktur abgelenkt beziehungsweise moduliert.

Für die Registrierung der modulierten Linien wird eine, in einem bestimmten Winkel, dem so genannten Triangulationswinkel, angeordnete CCD- Kamera eingesetzt.

| | |
|---|---|
| Messfeldgröße: | 14,5x23,4 mm$^2$ |
| Profillänge: | 20,0 mm |
| Flächenrauheit: | 1,0 mm vom Rand entfernt (Xm = 21,4mm; Ym = 12,5mm) |
| Filterung: | Polynomfilter 3. Ordnung |

Zu beziehen sind entsprechende Messgeräte unter anderem bei der GFMesstechnik GmbH in Teltow.

Schälfestikeit (Klebkraft) KK

Die Prüfung der Schälfestigkeit (Klebkraft) erfolgt in Anlehnung an PSTC-1.

Ein Streifen des zu untersuchenden (Selbst)klebebandes wird in definierter Breite (Standard: 20 mm) auf einer geschliffenen Stahlplatte beziehungsweise auf einem anderen gewünschten Haft-/Prüfuntergrund wie zum Beispiel Polyethylen oder Polycarbonat usw. durch zehnmaliges Überrollen mittels einer 5 kg Stahlrolle verklebt. Doppelseitig klebende Klebebänder werden mit einer 36 $\mu$m dicken Hart-PVC-Folie rückseitig verstärkt. Die so präparierte Platte wird in das Prüfgerät eingespannt, der Klebestreifen über sein freies Ende an einer Zugprüfmaschine unter einem Schälwinkel von 180° mit einer Geschwindigkeit von 300 mm/min abgezogen, und die dafür notwendige Kraft ermittelt. Die Messergebnisse sind in N/cm angegeben und über drei Messungen gemittelt. Alle Messungen werden in einem klimatisierten Raum bei 23 °C und 50 % relativer Luftfeuchte durchgeführt.

Quantitative Ermittlung der Scherfestikeit: Statischer Schertest SSZ

Ein Klebeband wird auf einen vorgegebenen, starren Haftuntergrund (hier Stahl) aufgebracht und einer konstanten Scherbelastung ausgesetzt. Ermittelt wird die Haltedauer in Minuten.

Durch eine geeignete Plattenaufhängung (Winkel 179 ± 1 °) wird sichergestellt, dass sich das Klebeband nicht von der Unterkante der Platte abschält.

In erster Linie soll die Prüfung eine Aussage über die Kohäsivität der Masse liefern. Dies ist aber nur dann der Fall, wenn die Parameter Gewicht und Temperatur so gewählt werden, dass es bei der Prüfung tatsächlich zu Kohäsionsversagen kommt.

Ansonsten gibt der Test Aufschluss über die Adhäsion zum Haftgrund oder über eine Kombination aus Adhäsion und Kohäsivität der Masse.

Ein 13 mm breiter Streifen des zu prüfenden Klebebandes wird auf einem polierten Stahlplättchen (Prüfuntergrund) auf einer Länge von 5 cm mit einer 2 kg-Rolle durch 10 maliges Überrollen verklebt. Doppelseitig klebende Klebebänder werden auf der Rückseite mit einer 50 $\mu$m starken Aluminiumfolie abgedeckt und somit verstärkt. Anschließend wird eine Gurtschlaufe an das untere Ende des Klebebandes angebracht. Sodann wird mit Schraube und Mutter ein Adapterplättchen auf der Vorderseite der Schertestplatte befestigt, um den vorgegebenen Winkel von 179 ± 1 ° zu gewährleisten. Die Aufziehzeit zwischen Anrollen und Belastung soll zwischen 10 und 15 Minuten liegen. Die Gewichte werden anschließend ruckfrei mit Hilfe der Gurtschlaufe angehängt.

Eine automatische Zähleruhr ermittelt nun den Zeitpunkt des Abscherens der Prüfmuster.

Raumgewicht/ Dichte

*Dichtebestimmung mittels Pyknometer:*

Das Messprinzip beruht auf der Verdrängung der im Pyknometer befindlichen Flüssigkeit. Dabei wird erst das leere bzw. das mit Flüssigkeit gefüllte Pyknometer gewogen und dann der zu messende Körper in das Gefäß gegeben. Aus den Gewichtsunterschieden berechnet sich die Dichte des Körpers:

Sei

- $m_0$ die Masse des leeren Pyknometers,
- $m_1$ die Masse des mit Wasser gefüllten Pyknometers,
- $m_2$ die Masse des Pyknometers mit dem Festkörper,
- $m_3$ die Masse des Pyknometers mit dem Festkörper, aufgefüllt mit Wasser,
- $\rho_W$ die Dichte des Wassers bei der entsprechenden Temperatur,
- $\rho_F$ die Dichte des Festkörpers

dann ergibt sich die Dichte des Festkörpers zu:

$$\rho_F = \frac{(m_2 - m_0)}{(m_1 - m_0) - (m_3 - m_2)} \cdot \rho_W$$

Es wird pro Muster jeweils eine Dreifachbestimmung durchgeführt.

*Schnellverfahren Dichtebestimmung über den Masseauftrag und die Schichtdicke*

Das Raumgewicht beziehungsweise die Dichte einer beschichteten Selbstklebemasse wird über das Verhältnis vom Flächengewicht zu der jeweiligen Schichtdicke bestimmt:

$$\rho = \frac{m}{V} = \frac{MA}{d} \qquad\qquad [\rho] = \frac{[kg]}{[m^2] \cdot [m]} = \left[\frac{kg}{m^3}\right]$$

MA = Masseauftrag/Flächengewicht (ohne Linergewicht) in [kg/m$^2$]
d = Schichtdicke (ohne Linerdicke) in [m]

Basis der Beispiele

Im Folgenden wird anhand von Vergleichsbeispielen sowie anhand von Beispielen die Erfindung näher erläutert, ohne dass damit eine Einschränkung des Erfindungsgegenstands gewollt ist.

Die nachstehenden Vergleichsbeispiele 1.1. und 1.2. weisen die Vorteile der Schäumung einer Selbstklebemasse nach dem erfindungsgemäßen Hotmelt-Verfahren gegenüber der Schäumung aus Lösungsmittel auf.

Die aus dem erfindungsgemäßen Verfahren resultierenden Vorteile können an einem fertigen, geschäumten Selbstklebeband auf einfachste Weise nachgewiesen werden, wie es im zusätzlichen Vergleichsbeispiel 2 aufgezeigt wird.

Der Kürze halber wird in den Beispielen der Begriff "Hotmelt" mit dem Begriff. "Hotmeltverfahren", das sich als ein erfindungsgemäßes Verfahren darstellt, gleichgesetzt.

Eingesetzte Rohstoffe:

In den anschließenden Beispielen wurden folgende Rohstoffe verwendet:

Tabelle 1: Eingesetzte Rohstoffe

| Handelsname | Rohstoff/ IUPAC | Hersteller/ Lieferant |
|---|---|---|
| Voranol P 400 ® | Polypropylenglykol, Diol | Dow |
| Voranol 2000L ® | Polypropylenglykol, Diol | Dow |
| Voranol CP 6055 ® | Polypropylenglykol, Triol | Dow |
| MPDiol ® | 2-Methyl-1,3-propandiol | Lyondell |
| Vestanat IPDI ® | Isophorondiisocyanat | Degussa |
| Desmodur N 3300 ® | aliphatisches Polyisocyanat auf Basis Hexamethylendiisocyanat sterisch gehindert. Amin, Licht- und Alterungsschutzmittel | Bayer |
| Tinuvin 292 ® | | Ciba |
| Tinuvin 400 ® | Triazin-Derivat, UV-Schutzmittel | Ciba |
| Coscat 83 ® | Bismuttrisneodecanoat CAS-Nr. 34364-26-6 | Caschem |
| Aerosil R 202 ® | Pyrogene Kieselsäure, hydrophobiert | Evonik |
| n-Butylacrylat | Acrylsäure-n-Butylester | Rohm & Haas |
| Acrylsäure rein | Acrylsäure | BASF |
| N-tert.Butylacrylamid | N-(1,1-dimethylethyl)-2-propenamid | Linz Chemie |
| 2-Ethylhexylacrylat | 2-Ethylhexylacrylat | Brenntag |
| Bisomer HEMA | 2-Hydroxyethylmethacrylat | IMCD Deutschland |
| Methylacrylat | Acrylsäure-Methylester | BASF |
| Maleinsäureanhydrid | 2,5-Dihydro-2,5-furan-dion, MSA | Condea-Huntsman |
| Expancel 051 DU 40 ® | Mikroballons (MB) | Expancel Nobel Industries |

Basisrezepturen der vorgefertigten Basismassen:

| Klebemasse K | Herstellung H | Rohstoffe | Anteil [Gew.-%] |
|---|---|---|---|
| K1 | H1 | n-Butylacrylat | 44,2 |
| | | 2-Ethylhexylacrylat | 44,7 |
| | | Maethylacrylat | 8,6 |
| | | Acrylsäure rein | 1,5 |
| | | Bisomer HEMA | 1,0 |
| | | | |
| K2 | H1 | n-Butylacrylat | 44,9 |
| | | 2-Ethylhexylacrylat | 44,9 |
| | | N.tert.-Butylacrylamid | 6,2 |
| | | Acrylsäure rein | 3,0 |
| | | Maleinsäureanhydrid | 1,0 |
| | | | |
| K3 | H2 | Voranol P400 | 17,23 |
| | | Voranol CP 6055 | 48,88 |
| | | MP Diol | 3,60 |
| | | Voranol 2000L | 8,09 |
| | | Tinuvin 400 | 0,21 |
| | | Tinuvin 292 | 0,10 |
| | | Coscat 83 | 0,41 |
| | | Aerosil R202 | 2,06 |
| | | Vestanat IPDI | 19,42 |
| | | | |

Herstellvarianten der vorgefertigten Basismassen:

*Herstellung H1:*

Die oben stehenden Monomergemische (Mengenangaben in Gew.-%) werden in Lösung copolymerisiert. Die Polymerisationsansätze bestehen aus 60 Gew.-% der Monomergemische sowie 40 Gew.-% Lösungsmittel (wie Benzin 60/95 und Aceton). Die Lösungen werden in üblichen Reaktionsgefäßen aus Glas oder Stahl (mit Rückflusskühler, Rührer, Temperaturmesseinheit und Gaseinleitungsrohr) zunächst durch Spülen mit Stickstoff von Sauerstoff befreit und dann zum Sieden erwärmt.
Durch Zusatz von 0,2 bis 0,4 Gew.-% eines für die radikalische Polymerisation üblichen Initiators wie Dibenzoylperoxid, Dilauroylperoxid oder Azobisisobutyronitril wird die Polymerisation ausgelöst.
Während der Polymerisationszeit von etwa 20 Stunden wird je nach Viskosität gegebenenfalls mehrmals mit weiterem Lösungsmittel verdünnt, so dass die fertigen Polymerlösungen einen Feststoffgehalt von 35 bis 55 Gew.-% aufweisen.
Die Aufkonzentration findet durch Erniedrigen des Druckes und/oder Erhöhung der Temperatur statt.

*Herstellung H2:*

Das verzweigte, thermoplastisch verarbeitbare, hydroxyl-funktionalisierte Polyurethan-Hotmelt-Prepolymer wurde durch homogenes Mischen und somit Umsetzen der angegebenen Ausgangsstoffe in den angegebenen Mengenverhältnissen hergestellt:

Zunächst wurden alle aufgeführten Ausgangsstoffe außer dem MP Diol und dem Vestanat IPDI bei einer Temperatur von 70°C und einem Druck von 100 mbar 1,5 Stunden gemischt. Sodann wurde das MP Diol 15 Minuten lang zugemischt und anschließend das Vestanat IPDI, ebenfalls während einer Dauer von 15 Minuten. Durch die entstandene Reaktionswärme erwärmte sich die Mischung auf 100°C und wurde nun zu einem Teil in Vorratsbehälter abgefüllt. Ein anderer Teil wurde direkt in Teilschritt B) weiter verarbeitet.

Das entstandene Prepolymer war bei Raumtemperatur fest. Die komplexe Viskosität $\eta^*$ betrug bei Raumtemperatur (23°C) 22000 Pas und bei 70°C 5500 Pas.

Das gewichtsgemittelte mittlere Molekulargewicht $M_W$ betrug 125000 g/mol, das zahlengemittelte mittlere Molekulargewicht $M_N$ 17800 g/mol.

Rezepturen der erfindungsgemäßen geschäumten Massesysteme auf Grundlage der vorgefertigten Basismassen K:

| Versuchsmuster S | Basis Klebemasse K | Zusatzstoffe | Anteil der Zusatzstoffe [Gew.-%] | Nach dem erfindungsgemäßen Herstellverfahren |
|---|---|---|---|---|
| | | | | |
| S1 | K1 | Polypox R16 | 0,01 | V1 |
| | | Epikure 925 | 0,1 | |
| | | Expancel 051 DU 40 | 3 | |
| S2 | K1 | Polypox R16 | 0,01 | V1 |
| | | Epikure 925 | 0,1 | |
| | | Expancel 051 DU 40 | 5 | |
| S3 | K1 | Polypox R16 | 0,01 | V1 |
| | | Epikure 925 | 0,1 | |
| | | Expancel 051 DU 40 | 8 | |
| S4 | K2 | Polypox R16 | 0,01 | V1 |
| | | Epikure 925 | 0,1 | |
| | | Expancel 051 DU 40 | 5,6 | |
| S5 | K2 | Polypox R16 | 0,01 | V1 |
| | | Epikure 925 | 0,1 | |
| | | Expancel 051 DU 40 | 5,6 | |
| | | Dertophene T110 | 10 | |
| S6 | K2 | Polypox R16 | 0,01 | V1 |
| | | Epikure 925 | 0,1 | |
| | | Expancel 051 DU 40 | 5,6 | |
| | | Dertophene T110 | 20 | |

(fortgesetzt)

| Versuchsmuster S | Basis Klebemasse K | Zusatzstoffe | Anteil der Zusatzstoffe [Gew.-%] | Nach dem erfindungsgemäßen Herstellverfahren |
|---|---|---|---|---|
| S7 | K2 | Polypox R16 | 0,013 | V1 |
| | | Epikure 925 | 0,13 | |
| S8 | K2 | Polypox R16 | 0,005 | V2 |
| | | Epikure 925 | 0,05 | |
| | | Expancel 051 DU 40 | 1 | |
| S9 | K2 | Polypox R16 | 0,013 | V1 |
| | | Epikure 925 | 0,13 | |
| | | Sylvares TP115 | 25 | |
| S10 | K2 | Polypox R16 | 0,005 | V2 |
| | | Epikure 925 | 0,05 | |
| | | Expancel 051 DU 40 | 1 | |
| | | Sylvares TP115 | 10 | |
| S11 | K3 | Coscat 83 | 0,41 | V1 |
| | | Expancel 051 DU 40 | 3 | |
| S12 | K3 | Coscat 83 | 0,41 | V1 |
| | | Expancel 051 DU 40 | 5 | |
| S13 | K3 | Coscat 83 | 0,41 | V1 |
| | | Expancel 051 DU 40 | 8 | |
| S14 | K3 | Coscat 83 | 0,41 | V1 |

Erfindungsgemäße Herstellverfahren V:

*Verfahren V1:*

Die Herstellung erfolgt wie es in der Offenbarung zu Figur 1 beschrieben ist.
Die Temperaturprofile und Maschinenparameter werden dem herzustellenden Massesystem, wie der zu compoundierenden Polymermatrix, dem Vernetzungssystem, dem Mikroballontyp und/ oder weiteren Additiven und Füllstoffen jeglicher Art angepasst und sind detailliert in den Beispielen aufgeführt.

*Vefrahren V2:*

Die Herstellung erfolgt wie es in der Offenbarung zu Figur 2 beschrieben ist.
Die Temperaturprofile und Maschinenparameter werden dem herzustellenden Massesystem, wie der zu compoundierenden Polymermatrix, dem Vernetzungssystem, dem Mikroballontyp und/ oder weiteren Additiven und Füllstoffen jeglicher Art angepasst und sind detailliert in den Beispielen aufgeführt.

Beispiele

Beispiel 1:

Abgestufte Mikroballongehalte bei gleicher Massebasis

| Versuchsmuster | Masseauftrag [g/m$^2$] | Schichtdicke [μm] | Dichte [kg/m$^3$] | KK Stahl 90° 3d Aufziehen [N/cm] | SSZ RT 10N [min] | SSZ 70°C 10N [min] |
|---|---|---|---|---|---|---|
| S1 | 498 | 873 | 570 | 13,4 | 1524 | 40 |
| S2 | 458 | 953 | 481 | 14,9 | 4722 | 149 |
| S3 | 378 | 1048 | 361 | 11,7 | >10000 | 702 |

Beispiel_2:

Abgestufte Harzgehalte bei gleicher Massebasis und konstantem Mikroballongehalt

| Versuchsmuster | Masseauftrag [g/m$^2$] | Schichtdicke [μm] | Dichte [kg/m$^3$] | KK Stahl 90° 3d Aufziehen [N/cm] | SSZ RT 10N [min] | SSZ 70°C 10N [min] |
|---|---|---|---|---|---|---|
| S4 | 606 | 1030 | 588 | 8,7 | 2210 | 21 |
| S5 | 438 | 1038 | 422 | >17,6 | >10000 | 76 |
| S6 | 404 | 1010 | 400 | >22,1 | >10000 | 399 |

Beispiel 3:

Vergleich ungeschäumt / geschäumt

Harzfrei / harzhaltig

| Versuchsmuster | Masseauftrag [g/m$^2$] | Schichtdicke [μm] | Dichte [kg/m$^3$] | KK Stahl 90°3d Aufziehen [N/cm] | SSZ RT 10N [min] | SSZ 70 °C 10N [min] |
|---|---|---|---|---|---|---|
| S7 | 994 | 915 | 1086 | 13,8 | 325 | 13 |
| S8 | 563 | 955 | 589 | 24,1 | 1386 | 105 |
| S9 | 954 | 910 | 1048 | 18,9 | 831 | 30 |
| S10 | 614 | 955 | 643 | 23,9 | >3000 | 25 |

Muster S7 und S9 nach Verfahren 1, da ungeschäumte Masse eine nachträgliche Entgasung benötigt. Geschäumte Masse hingegen nicht, also Muster S8 und S10 nach Verfahren 2 hergestellt.

Beispiel 4:

Polyurethanmassen mit abgestuftem Mikroballongehalt

| Versuchsmuster | Masseauftrag [g/m$^2$] | Schichtdicke [μm] | Dichte [kg/m$^3$] | KK Stahl 90°3d Aufziehen [N/cm] | SSZ RT 10N [min] | SSZ 70°C 10N [min] |
|---|---|---|---|---|---|---|
| S11 | 547 | 1010 | 542 | 24,4 | 492 | 3 |
| S12 | 402 | 990 | 406 | >21,4 | 1723 | 14 |
| S13 | 397 | 1073 | 370 | >29,7 | 1125 | 9 |

Beispiel 5

Versuchsmuster S11 bis S14 nachträglich doppelseitig mit 50g/m$^2$ Nachstrichmasse kaschiert

Dreischichtaufbau

| Versuchsmuster | Masseauftrag [g/m$^2$] | Schichtdicke [μm] | Dichte [kg/m$^3$] | KK Stahl 90°3d Aufziehen [N/cm] | SSZ RT 10N [min] |
|---|---|---|---|---|---|
| S11 + 50g/m$^2$ | 647 | 1110 | 583 | 29,2 | 782 |
| S12 + 50g/m$^2$ | 502 | 1090 | 461 | 42,7 | 2336 |
| S13 + 50g/m$^2$ | 497 | 1173 | 424 | 34,2 | 911 |
| S14 + 50g/m$^2$ | 1150 | 1045 | 1100 | 20,8 | 150 |

**Patentansprüche**

1. Verfahren zur Herstellung eines geschäumten Massesystems enthaltend thermisch empfindliche Substanzen, bei dem das Massesystem in einem ersten Schritt bei einer ersten Temperatur geschäumt wird, **dadurch gekennzeichnet, dass** die thermisch empfindlichen Substanzen in einem folgenden Schritt bei einer zweiten, niedrigeren Temperatur als der ersten Temperatur zu dem Massesystem gegeben werden und dass das Massesystem eine Klebemasse, insbesondere eine Selbstklebemasse, ist, umfasst oder als eine solche eingesetzt werden kann.

2. Verfahren nach Anspruch 1, **dadurch gekennzeichnet, dass** die erste Temperatur, bei der das Massesystem geschäumt wird, der Expansionstemperatur der Mikroballons entspricht oder über dieser liegt und die zweite Temperatur, bei der die thermisch empfindlichen Substanzen zu dem Massesystem gegeben werden, unter der Expansionstemperatur der Mikroballons liegt.

3. Verfahren nach einem der Ansprüche 1 oder 2, **dadurch gekennzeichnet, dass**

 - in einem ersten Mischaggregat zunächst expandierbare Mikroballons - und gegebenenfalls weitere Additive
 - in ein Massesystem eingebracht werden;
 - das mit den Mikroballons versetzte Massesystem - insbesondere unter Überdruck-auf eine Temperatur, die mindestens der Expansionstemperatur der Mikroballons bei Normaldruck entspricht, vorteilhaft höher ist als diese, erhitzt wird,
 - die Mikroballons insbesondere beim Austritt aus dem ersten Mischaggregat expandiert werden,
 - das Massesystem in ein zweites Mischaggregat eingebracht wird, so dass in diesem zweiten Mischaggregat das Massesystem bei einer Temperatur vorliegt, die unter der Expansionstemperatur der Mikroballons liegt,
- die thermisch empfindlichen Substanzen in dem zweiten Mischaggregat zugegeben werden,
- das derart abgemischte Massesystem ausgeformt wird.

4. Verfahren nach einem der Ansprüche 1 oder 2, **dadurch gekennzeichnet, dass**

- in einem ersten Mischaggregat zunächst expandierbare Mikroballons - und gegebenenfalls weitere Additive
- in ein Massesystem eingebracht werden;
- das mit den Mikroballons versetzte Massesystem - insbesondere unter Überdruck-innerhalb einer ersten Mischzone des Mischaggregats auf eine Temperatur, die mindestens der Expansionstemperatur der Mikroballons bei Normaldruck entspricht, vorteilhaft höher ist als diese, erhitzt wird,
- das Massesystem nachfolgend aus der ersten Mischzone in eine zweite Mischzone des ersten Mischaggregats überführt wird, so dass in dieser zweiten Mischzone das Massesystem bei einer Temperatur vorliegt, die unter der Expansionstemperatur der Mikroballons liegt,
- die thermisch empfindlichen Substanzen bei der Überführung des Massesystems in die zweite Mischzone und/oder nach der Überführung in die zweite Mischzone zugegeben werden,
- das derart abgemischte Massesystem ausgeformt wird.

5. Verfahren nach einem der vorangehenden Ansprüche, **dadurch gekennzeichnet, dass** es sich bei den thermisch empfindlichen Substanzen oder einem Teil der thermisch empfindlichen Substanzen um thermische Vernetzer handelt.

6. Verfahren nach einem der vorangehenden Ansprüche, **dadurch gekennzeichnet, dass** es sich bei den thermisch empfindlichen Substanzen oder einem Teil der thermisch empfindlichen Substanzen um Beschleuniger und/oder Regler für eine thermische Vernetzungsreaktion handelt.

7. Verfahren nach einem der vorangehenden Ansprüche, **dadurch gekennzeichnet, dass** das Massesystem bei der Zugabe der thermisch vernetzten Substanzen in einem unvernetzten Zustand vorliegt.

8. Verfahren nach einem der vorangehenden Ansprüche, **dadurch gekennzeichnet, dass** das aufgeschäumte und mit den thermisch empfindlichen Substanzen versehene Massesystem zur Schicht ausgeformt wird, insbesondere auf ein Träger- oder Releasematerial.

9. Verfahren nach einem der Ansprüche 5 bis 8, **dadurch gekennzeichnet, dass** das Massesystem thermisch vernetzt wird.

10. Verfahren nach den Ansprüchen 8 und 9, **dadurch gekennzeichnet, dass** die thermische Vernetzungsreaktion oder der größte Teil der thermischen Vernetzungsreaktion nach der Ausformung zur Schicht, insbesondere auf einem Träger- oder Releasematerial, stattfindet.

11. Mit Mikroballons geschäumte, thermisch vernetzte Klebemasse, erhältlich nach einem Verfahren gemäß Anspruch 5.

12. Verwendung einer geschäumten Klebemasse nach Anspruch 11, als Selbstklebemasse für ein ein- oder doppelseitig klebendes Klebeband.

**Claims**

1. Method for producing a foamed mass system comprising thermally sensitive substances, in which the mass system is foamed in a first step at a first temperature,
**characterized in that**
the thermally sensitive substances are added to the mass system in a following step at a second temperature, which is lower than the first temperature and **in that** the mass system is, comprises or can be used as an adhesive, more particularly a self-adhesive.

2. Method according to Claim 1, **characterized in that** the first temperature, at which the mass system is foamed, corresponds to or lies above the expansion temperature of the microballoons, and the second temperature, at which the thermally sensitive substances are added to the mass system, lies below the expansion temperature of the microballoons.

3.  Method according to either of Claims 1 and 2, **characterized in that**

- in a first mixing assembly, first of all, expandable microballoons - and optionally further additives - are introduced into a mass system;
- the mass system with the microballoons added is heated - more particularly under superatmospheric pressure - to a temperature which at least corresponds to, and is advantageously higher than, the expansion temperature of the microballoons under atmospheric pressure,
- the microballoons are expanded in particular on emergence from the first mixing assembly,
- the mass system is introduced into a second mixing assembly, and so in this second mixing assembly the mass system is at a temperature which lies below the expansion temperature of the microballoons,
- the thermally sensitive substances are added in the second mixing assembly,
- the mass system thus blended is shaped.

4.  Method according to either of Claims 1 and 2, **characterized in that**

- in a first mixing assembly, first of all, expandable microballoons - and optionally further additives - are introduced into a mass system;
- the mass system with the microballoons added is heated - more particularly under superatmospheric pressure - in a first mixing zone of the mixing assembly to a temperature which at least corresponds to, and is advantageously higher than, the expansion temperature of the microballoons under atmospheric pressure,
- the mass system is subsequently transferred from the first mixing zone into a second mixing zone of the first mixing assembly, and so in this second mixing zone the mass system is at a temperature which lies below the expansion temperature of the microballoons,
- the thermally sensitive substances are added during transfer of the mass system to the second mixing zone and/or after transfer to the second mixing zone,
- the mass system thus blended is shaped.

5.  Method according to any of the preceding claims, **characterized in that** the thermally sensitive substances or a portion of the thermally sensitive substances are thermal crosslinkers.

6.  Method according to any of the preceding claims, **characterized in that** the thermally sensitive substances or a portion of the thermally sensitive substances are accelerators and/or regulators for a thermal crosslinking reaction.

7.  Method according to any of the preceding claims, **characterized in that** the mass system, on addition of the thermally crosslinked substances, is present in a noncrosslinked state.

8.  Method according to any of the preceding claims, **characterized in that** the foamed mass system provided with the thermally sensitive substances is shaped to form the layer, more particularly onto a carrier material or release material.

9.  Method according to any of Claims 5 to 8, **characterized in that** the mass system is thermally crosslinked.

10. Method according to Claims 8 and 9, **characterized in that** the thermal crosslinking reaction or the major part of the thermal crosslinking reaction takes place after the shaping to form the layer, more particularly on a carrier material or release material.

11. Thermally crosslinked adhesive, foamed using microballoons and obtainable by a method according to Claim 5.

12. Use of a foamed adhesive according to Claim 11 as self-adhesive for a single- or double-sidedly adhesive tape.

**Revendications**

1.  Procédé pour la préparation d'un système de masse moussé, contenant des substances thermosensibles, dans lequel le système de masse est moussé dans une première étape à une première température, **caractérisé en ce que** les substances thermosensibles peuvent être ajoutées, dans une étape suivante, à une deuxième température, plus basse que la première température, au système de masse et **en ce que** le système de masse est ou comprend une masse adhésive, en particulier une masse autoadhésive ou peut être utilisé en tant que telle.

2. Procédé selon la revendication 1, **caractérisé en ce que** la première température, à laquelle le système de masse est moussé, correspond à la température d'expansion des microballons ou est supérieure à celle-ci et la deuxième température, à laquelle les substances thermosensibles sont ajoutées au système de masse, se situe sous la température d'expansion des microballons.

3. Procédé selon l'une quelconque des revendications 1 ou 2, **caractérisé en ce que**

- on introduit d'abord, dans un premier appareil de mélange, des microballons expansibles - et le cas échéant d'autres additifs - dans un système de masse ;
- on chauffe le système de masse additionné des microballons - en particulier sous une surpression - à une température qui correspond au moins à la température d'expansion des microballons à pression normale, qui est avantageusement supérieure à celle-ci,
- les microballons sont expansés, en particulier à la sortie du premier appareil de mélange,
- on introduit le système de masse dans un deuxième appareil de mélange, de manière telle que le système de masse se trouve, dans ce deuxième appareil de mélange, à une température qui est inférieure à la température d'expansion des microballons,
- on ajoute les substances thermosensibles dans le deuxième appareil de mélange,
- on façonne le système de masse ainsi mélangé.

4. Procédé selon l'une quelconque des revendications 1 ou 2, **caractérisé en ce que**

- on introduit d'abord, dans un premier appareil de mélange, des microballons expansibles - et le cas échéant d'autres additifs - dans un système de masse ;
- on chauffe le système de masse additionné des microballons - en particulier sous une surpression - dans une première zone de mélange de l'appareil de mélange, à une température qui correspond au moins à la température d'expansion des microballons à pression normale, qui est avantageusement supérieure à celle-ci,
- on transfère ensuite le système de masse de la première zone de mélange dans une deuxième zone de mélange du premier appareil de mélange, de manière telle que le système de masse se trouve, dans cette deuxième zone de mélange, à une température qui est inférieure à la température d'expansion des microballons,
- on ajoute les substances thermosensibles lors du transfert du système de masse dans la deuxième zone de mélange et/ou après le transfert dans la deuxième zone de mélange,
- on façonne le système de masse ainsi mélangé.

5. Procédé selon l'une quelconque des revendications précédentes, **caractérisé en ce qu'**il s'agit, pour les substances thermosensibles ou pour une partie des substances thermosensibles, de réticulants thermiques.

6. Procédé selon l'une quelconque des revendications précédentes, **caractérisé en ce qu'**il s'agit, pour les substances thermosensibles ou pour une partie des substances thermosensibles, d'accélérateurs et/ou de régulateurs pour une réaction de réticulation thermique.

7. Procédé selon l'une quelconque des revendications précédentes, **caractérisé en ce que** le système de masse se trouve, lors de l'addition des substances réticulées par voie thermique, dans un état non réticulé.

8. Procédé selon l'une quelconque des revendications précédentes, **caractérisé en ce que** le système de masse moussé et pourvu des substances thermosensibles, est façonné en une couche, en particulier sur un matériau support ou antiadhésif.

9. Procédé selon l'une quelconque des revendications 5 à 8, **caractérisé en ce que** le système de masse est réticulé par voie thermique.

10. Procédé selon les revendications 8 et 9, **caractérisé en ce que** la réaction de réticulation thermique ou la plus grande partie de la réaction de réticulation thermique a lieu après le façonnage en couche, en particulier sur un matériau support ou antiadhésif.

11. Masse adhésive moussée avec des microballons, réticulée thermiquement, pouvant être obtenue selon un procédé selon la revendication 5.

**12.** Utilisation d'une masse adhésive moussée selon la revendication 11, comme masse autoadhésive pour une bande adhésive monoface ou double face.

Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0257984 A1
- DE 3537433 A1
- WO 9531225 A1
- EP 0693097 A1
- WO 9818878 A1
- DE 19730854 A1
- WO 9532851 A1
- EP 1102809 B1
- DE 2105877 C
- WO 03011954 A1
- WO 2006027387 A1
- DE 102007016950 A1

**In der Beschreibung aufgeführte Nicht-Patentliteratur**

- **T.G. FOX.** *Bull. Am. Phys. Soc.,* 1956, vol. 1, 123